(19) Europäisches Patentamt / European Patent Office / Office européen des brevets

(11) **EP 2 562 218 A1**

(12) **EUROPEAN PATENT APPLICATION**
published in accordance with Art. 153(4) EPC

(43) Date of publication:
27.02.2013 Bulletin 2013/09

(51) Int Cl.:
*C08L 71/02* (2006.01)     *C08L 23/08* (2006.01)
*C08L 31/04* (2006.01)     *C08L 101/12* (2006.01)

(21) Application number: 11771950.0

(22) Date of filing: 15.04.2011

(86) International application number:
PCT/JP2011/059418

(87) International publication number:
WO 2011/132615 (27.10.2011 Gazette 2011/43)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 23.04.2010 JP 2010100156

(71) Applicant: Sumitomo Seika Chemicals Co. Ltd.
Kako-gun, Hyogo 675-0145 (JP)

(72) Inventors:
• OZAWA, Hitoshi
Himeji-shi
Hyogo 672-8076 (JP)
• OHTANI, Tatsuo
Himeji-shi
Hyogo 672-8076 (JP)
• NISHIKAWA, Yusuke
Himeji-shi
Hyogo 672-8076 (JP)

(74) Representative: Nicholls, Kathryn Margaret et al
Mewburn Ellis LLP
33 Gutter Lane
GB-London EC2V 8AS (GB)

(54) **RESIN COMPOSITION THAT CAN RETAIN WET-STATE LUBRICITY**

(57) Provided is a resin composition which has excellent lubricity and a good touch feeling under wet conditions and suffers from little deterioration in the lubricity or the good touch feeling even if used repeatedly, and is excellent in flexibility. More specifically, the resin composition contains 100 parts by mass of a water-absorbing polymer and 60 to 500 parts by mass of a thermoplastic resin that has a type D durometer hardness (HDD) of 10 to 60.

Fig. 1

Monitored width: 20 mm

EP 2 562 218 A1

**Description**

Technical Field

The present invention relates to a resin composition whose lubricity under wet conditions is maintained. More particularly, the present invention relates to a resin composition obtained by mixing a water-absorbing modified polyalkylene oxide with a thermoplastic resin.

Background Art

There has heretofore been proposed a razor blade cartridge in which a water-soluble resin such as a polyalkylene oxide is attached, penetrated or dispersed in a part of a razor blade cartridge made of plastic in order to reduce the resistance between a part of a razor and the face or the like (Patent Document 1).
Moreover, some composites in which a water-absorbing resin is swollen to release a variety of aids upon immersion in water, due to mixing of a water-soluble resin and a water-absorbing resin, have been used in a smoother for wet shaving (Patent Document 2).
In addition, as a polymer composite used for wet shaving instruments and medical instruments, a polymer composite containing a water-insoluble polymer, and a water-sensitive copolymer polymerized from an alkylene oxide monomer and an epoxy-functional monomer has been disclosed (Patent Document 3).

Prior Art Documents

Patent Documents

Patent Document 1: JP 54-94961 A
Patent Document 2: JP 9-502632 A
Patent Document 3: JP 2004-509207 A

Summary of the Invention

Problems to be Solved by the Invention

The razor blade cartridge described in Patent Document 1, the composite described in Patent Document 2, and the polymer composite described in Patent Document 3 give lubricity to a surface of the composite or the like utilizing dissolution of a water-soluble resin such as a polyalkylene oxide under wet conditions.
However, the water-soluble resin has low compatibility with a thermoplastic resin or the like and is merely scattered on a surface of the composite or the like in a massive form. For this reason, lubricity at the initial stage of use is excellent, but the scattered water-soluble resin is dropped in a massive form by repeated used, and the lubricity is lost in a short term.
In addition, generally, in a water-soluble resin such as a polyalkylene oxide, lubricity is improved as the molecular weight increases, but cobwebbing under wet conditions becomes remarkable and, further, the melt viscosity thereof becomes high. Therefore, it is necessary to raise the temperature upon processing. For this reason, the resin is often mixed with a hard resin such as a high impact polystyrene or a polystyrene having a high processing temperature, and the hardness of the resulting resin composition is high. Therefore, there is a problem that, when the resin is mounted on, for example, a razor requiring flexibility that is equipped with a bendable blade in order to fit with the skin, the resin is cracked upon bending.
On the other hand, when the water-soluble resin is mixed with resins obtained by copolymerizing a rubber component having flexibility, since these resins have to be processed at a low temperature, there is a problem that the water-soluble resin such as a polyalkylene oxide cannot be sufficiently molten and is brought into a state where the water-soluble resin such as the polyalkylene oxide is scattered in a composition, and not only design characteristics and lubricity upon repeated use are deteriorated, but also objective flexibility is suppressed.
An object of the present invention is to provide a resin composition which has excellent lubricity and a good touch feeling under wet conditions and suffers from little deterioration in the lubricity or the good touch feeling even if used repeatedly, and is excellent in flexibility.

Means for Solving the Problems

The present inventors studied earnestly in order to solve the above-described problems and found that a resin composition containing a water-absorbing modified polyalkylene oxide and a thermoplastic resin having a type D durometer hardness (HDD) of 10 to 60 is excellent in lubricity, does not lose its lubricity even if used repeatedly, and has flexibility. Thus, they have accomplished the present invention.

That is, the present invention relates to a resin composition which maintains excellent lubricity and a good touch feeling even if used repeatedly, and has flexibility. More particularly, the present invention relates to a resin composition containing 100 parts by mass of a water-absorbing modified polyalkylene oxide and 60 to 500 parts by mass of a thermoplastic resin having a type D durometer harness (HDD) of 10 to 60.

Effects of the Invention

Since the resin composition of the present invention does not lose lubricity and a good touch feeling even if used repeatedly, and is also excellent in flexibility, it can be widely used in wet shaving instruments represented by a razor, and medical instruments such as a catheter.

Brief Description of the Drawings

Fig. 1 is a schematic view showing a method of obtaining a mean coefficient of friction (MIU).
Fig. 2 is a schematic view showing a method of obtaining a deviation in mean coefficient of friction (MMD).

Mode for Carrying Out the Invention

The resin composition of the present invention is obtained by mixing a water-absorbing modified polyalkylene oxide with a thermoplastic resin having a type D durometer hardness (HDD) of 10 to 60.

The water-absorbing modified polyalkylene oxide used in the resin composition of the present invention is, for example, a modified polyalkylene oxide obtained by reacting a polyalkylene oxide compound, a diol compound and a diisocyanate compound. Such a modified polyalkylene oxide has thermoplasticity. For this reason, the modified polyalkylene oxide has good compatibility with a thermoplastic resin, and a resin composition having flexibility can be obtained.

As the polyalkylene oxide compound, a polyalkylene oxide compound having 90% by mass or more of ethylene oxide groups is preferable, and a polyalkylene oxide compound having 95% by mass or more of ethylene oxide groups is more preferable. When the amount of ethylene oxide groups is less than 90% by mass, there is a possibility that lubricity at the initial stage of the resulting resin composition is deteriorated.

As the polyalkylene oxide compound, a polyalkylene oxide compound having a number average molecular weight of 5,000 to 50,000 is preferable, and a polyalkylene oxide compound having a number average molecular weight of 10,000 to 30,000 is more preferable. When a polyalkylene oxide compound having a number average molecular weight of less than 5,000 is used, there is a possibility that lubricity at the initial stage of the resulting resin composition is deteriorated. When a polyalkylene oxide compound having a number average molecular weight of more than 50,000 is used, there is a possibility that the melt viscosity of the resulting water-absorbing modified polyalkylene oxide is high, compatibility with a thermoplastic resin is deteriorated, and it becomes difficult to maintain lubricity upon repeated use.

Examples of the diol compound include ethylene glycol, diethylene glycol, triethylene glycol, tetraethylene glycol, propylene glycol, dipropylene glycol, trimethylene glycol, 1,3-butanediol, 2,3-butanediol, 1,4-butanediol, 1,5-pentanediol, 1,6-hexanediol and 1,9-nonanediol. Among these diol compounds, from the viewpoints that the resulting water-absorbing modified polyalkylene oxide is excellent in the water absorption ability, that elution of a water-soluble component is suppressed, and that stability is excellent, ethylene glycol and 1, 4-butanediol are preferably used. These diol compounds may each be used alone, or two or more kinds may be used in combination.

The proportion of use of the diol compound is preferably 0.8 to 2.5 mol, more preferably 1.0 to 2.0 mol based on 1 mol of the polyalkylene oxide compound. When the proportion of use of the diol compound is less than 0.8 mol, there is a possibility that lubricity cannot be maintained when the resulting resin composition is used repeatedly. On the other hand, when the proportion of use of the diol compound is more than 2.5 mol, there is a possibility that lubricity at the initial stage of the resulting resin composition is deteriorated. The molar number of the polyalkylene oxide compound can be obtained by dividing the mass thereof by the number average molecular weight thereof.

The diisocyanate compound is not particularly limited as far as it is a compound having two isocyanate groups (-NCO) in the same molecule, and examples thereof include 4,4'-diphenylmethane diisocyanate (MDI), 1,6-hexamethylene diisocyanate (HDI), dicyclohexylmethane-4,4'-diisocyanate (HMDI), 3-isocyanatomethyl-3,5,5-trimethylcyclohexyl isocyanate (IPDI), 1,8-dimethylbenzol-2,4-diisocyanate, and 2,4-tolylene diisocyanate (TDI). Among these diisocyanate compounds, from the viewpoints of compatibility with a thermoplastic resin, suppression of elution of a water-soluble compound, and excellent stability, dicyclohexylmethane-4,4'-diisocyanate (HMDI) and 1,6-hexamethylene diisocyanate (HDI) are preferably used. These diisocyanate compounds may each be used alone, or two or more kinds may be used in combination.

The proportion of use of each of the polyalkylene oxide compound, the diol compound and the diisocyanate compound is determined so that the ratio of the molar number of isocyanate groups of the diisocyanate compound relative to the total molar number of terminal hydroxyl groups of the polyalkylene oxide compound and hydroxyl groups of the diol compound [R value = (-NCO group/-OH group)] is preferably in the range of 0.7 to 1.2, more preferably in the range of 0.8 to 1.05. When the R value is less than 0.7, there is a possibility that the resulting water-absorbing modified polyalkylene oxide is water-soluble, and lubricity cannot be maintained when the resulting resin composition is used repeatedly. On the other hand, when the R value is more than 1.2, there is a possibility that the melt viscosity of the resulting water-absorbing modified polyalkylene oxide becomes high, and compatibility with a thermoplastic resin is deteriorated. The molar number of the polyalkylene oxide compound can be obtained by dividing the mass thereof by the number average molecular weight thereof.

Examples of a method of reacting the polyalkylene oxide compound, the diol compound and the diisocyanate compound include: a method of dissolving or dispersing the compounds in a reaction solvent such as toluene, xylene, or dimethylformamide to react; and a method of uniformly mixing these compounds in a powder state or a solid state, and heating the mixture to a predetermined temperature to react. From the viewpoint of industrial implementation, a method of continuously feeding raw materials in a molten state, and mixing the raw materials in a multi-screw extruder to react is preferable. The temperature of the reaction is preferably 70 to 210°C.

When the water-absorbing modified polyalkylene oxide is produced, from the viewpoint of promoting a reaction, a small amount of triethylamine, triethanolamine, dibutyltin dilaurate, dioctyltin dilaurate, tin 2-ethylhexanoate, triethylenediamine or the like can also be added to a reaction system.

Thus, by reacting the polyalkylene oxide compound, the diol compound and the diisocyanate compound, a water-absorbing modified polyalkylene oxide can be obtained.

The melt viscosity of the water-absorbing modified polyalkylene oxide used in the resin composition of the present invention, when measured using a flow tester (condition: 170°C, 5.0 MPa, a die having a diameter of 1 mm and a length of 1 mm is used), is preferably 100 to 800 [Pa·s], more preferably 200 to 600 [Pa·s]. When the melt viscosity is less than 100 [Pa·s], there is a possibility that lubricity at the initial stage of the resulting resin composition is deteriorated. When the melt viscosity is more than 800 [Pa·s], there is a possibility that compatibility with a thermoplastic resin is deteriorated.

The water absorption ability of the water-absorbing modified polyalkylene oxide used in the resin composition of the present invention is preferably 10 to 40 [g/g], more preferably 15 to 35 [g/g]. When the water absorption ability of the water-absorbing modified polyalkylene oxide is less than 10 [g/g], there is a possibility that lubricity at the initial stage of the resulting resin composition is deteriorated. When the water absorption ability of the water-absorbing modified polyalkylene oxide is more than 40 [g/g], there is a possibility that lubricity cannot be maintained when the resulting resin composition is used repeatedly. In the present invention, the water absorption ability is a value measured by a method described later.

The ratio of water-soluble component of the water-absorbing modified polyalkylene oxide used in the present invention, from the viewpoint of improving the lubricity of the resulting resin composition, is preferably 5 to 30% by mass, more preferably 10 to 20% by mass. When the water-soluble component of the water-absorbing modified polyalkylene oxide is less than 5% by mass, there is a possibility that lubricity at the initial stage is deteriorated. When the water-soluble component of the water-absorbing modified polyalkylene oxide is more than 30%, there is a possibility that lubricity cannot be maintained when the resulting resin composition is used repeatedly. The ratio of water-soluble component in the present invention is a value measured by a method described later.

The thermoplastic resin used in the resin composition of the present invention has a type D durometer hardness (HDD) of 10 to 60, preferably 20 to 50. When the HDD is less than 10, a force returning to the original shape (restoring force) is reduced when a force is applied to the resulting resin composition. When the HDD is more than 60, if the resulting resin composition is bent, the bent part is whitened and does not return to the original shape, and lubricity cannot be maintained when the resin composition is used repeatedly.

Examples of the thermoplastic resin having an HDD of 10 to 60 include an ethylene/methacrylic acid copolymer, an ethylene/vinyl acetate copolymer, an ethylene/acrylic acid copolymer, an ethylene/ethyl acrylate copolymer, and an acrylonitrile/butadiene/styrene copolymer (ABS). Among these thermoplastic resins, from the viewpoint that the resin has good compatibility with the water-absorbing modified polyalkylene oxide, an ethylene/vinyl acetate copolymer, an ethylene/acrylic acid copolymer, and an ethylene/ethyl acrylate copolymer are preferably used. These thermoplastic resins may each be used alone, or two or more kinds may be used in combination.

The proportion of use of the thermoplastic resin having an HDD of 10 to 60 is 60 to 500 parts by mass, preferably 100 to 300 parts by mass relative to 100 parts by mass of the water-absorbing modified polyalkylene oxide. When the proportion of use of the thermoplastic resin is less than 60 parts by mass, there is a problem that, when the resulting resin composition is contacted with water, the swelling ratio in water is high, the dimension is greatly changed by dilation and, for example, the resin is dropped from a razor blade cartridge. On the other hand, when the proportion of use of the thermoplastic resin is more than 500 parts by mass, lubricity at the initial stage of the resulting resin composition is deteriorated.

Examples of a method for producing the resin composition of the present invention include 1) a method of mixing the water-absorbing modified polyalkylene oxide with the thermoplastic resin having an HDD of 10 to 60 using a mixing machine such as a Henschel mixer or a blender, or supplying a predetermined amount of each of them to a kneader, a roll, an extruder or the like with a metering feeder, and melt-mixing them, and 2) a method of reacting the polyalkylene oxide, the diol compound and the diisocyanate compound in the thermoplastic resin having an HDD of 10 to 60, which has been molten in advance.

As an instrument in which the melting, the melt-mixing, or the reaction is performed, from the viewpoint that mixability of the components is excellent, a twin-screw extruder is preferably used. After the melt-mixing or the reaction, the melt may be molded into a desired shape such as a pellet, a sheet (in the present description, the sheet refers to a sheet having a thickness of 0.2 mm or more), a film (in the present description, the film refers to a film having a thickness of less than 0.2 mm), a bar, or a fiber by performing injection molding, extrusion molding or inflation molding.

When the resin composition of the present invention is produced, from the viewpoint of preventing degradation of the components or the resulting resin composition, a stabilizer; from the viewpoint of improving weather resistance of the resulting resin composition, a UV absorber; from the viewpoint of coloring the resulting resin composition, a pigment, a coloring material etc.; from the viewpoint of imparting foamability to the resulting resin composition, a soap material; and the like may be added.

From the viewpoint that processing at a low temperature is easy, the resin composition of the present invention can be mixed with a drug which is easily thermally degraded such as ascorbic acid, sodium ascorbate, or ethylascorbic acid. The resin composition with such a drug added thereto can effectively release the drug when contacted with water. The amount of addition of the drug is preferably 0.05 to 5.0 parts by mass, more preferably 0.1 to 3.5 parts by mass based on 100 parts by mass of the resin composition. When the amount of addition of the drug is less than 0.05 parts by mass, the amount of drug to be released from the resulting resin composition is small, and there is a possibility that the effect of the drug is not exerted. When the amount of addition of the drug is more than 5.0 parts by mass, there is a possibility that a surface of the resin composition is roughened to be brought into an irregular state, and not only smoothness is reduced but also control of the release amount of the drug becomes impossible.

The present invention will be described in more detail by way of examples and comparative examples, but the present invention is not limited thereto.

[Evaluation methods]

The water absorption ability and the ratio of water-soluble component of the modified polyalkylene oxide and the cross-linked polyacrylate described in production examples, the melt viscosity of the modified polyalkylene oxide, the type D durometer hardness (HDD) of the thermoplastic resin used in examples, as well as the bending test, swelling ratio, slimy feeling and friction physical properties of the resin composition obtained in examples and comparative examples were measured and evaluated according to the following methods.

(1) Water absorption ability

The water absorption ability of the modified polyalkylene oxide and the cross-linked polyacrylate were measured by the following method.

About 1 [g] of the modified polyalkylene oxide or the cross-linked polyacrylate was weighed (A [g]), and immersed in 100 [mL] of ion exchange water measured in a 200 mL beaker at room temperature (22°C) for 24 hours to gel. Thereafter, the gel was filtered with a wire gauze of 200 meshes (pore size: 75 $\mu$m), the mass thereof (B [g]) was measured, and the water absorption ability was calculated by the following equation.

$$\texttt{Water absorption ability [g/g] = B/A}$$

(2) Ratio of water-soluble component

A gel obtained by the measurement of (1) Water absorption ability was dried in a hot air dryer set at 105°C to a constant weight [C (g)], and the ratio of water-soluble component was calculated by the following equation, provided that A is the same as A in the measurement of (1) Water absorption ability.

```
Ratio of water-soluble component [mass %] = (A - C)/A ×
100
```

(3) Melt viscosity

1.5 g of the modified polyalkylene oxide or the like was measured using a flow tester (Model: CFT-500C, manufactured by Shimadzu Corporation) under the following conditions.
Load: 5.0 MPa
Measurement temperature: 170°C
Die diameter: 1 mm
Die length: 1 mm

(4) Type D durometer hardness (HDD)

The type D durometer hardness (HDD) means the "hardness" measured in "type D durometer hardness" in accordance with "Method of testing durometer hardness of plastic" described in Japanese Industrial Standard: JIS K 7215 (1986).
Specifically, after confirming that the flatness and parallelism of a sheet surface or a film surface of a molded resin composition were good, a plurality of sheets or films were piled so that the whole thickness (T) became 6 mm or more, and this was used as a measurement sample. After confirming that adherability between a plurality of sheets or films was good, the HDD of the resulting measurement sample was measured on a durometer holder.

(5) Bending test

Sheets or films of resin compositions obtained in examples and comparative examples were each cut into 2 cm (width: W) × 5 cm (length: L), and these were used as measurement samples.
Each measurement sample was bent at 90 degrees at a part 1 cm from an end (short side of 2 cm in width) of the measurement sample (the rest: 4 cm), and the bent part was evaluated in accordance with the following criteria. In addition, separately, using the same measurement samples and changing the bending angle to 180 degrees, the same evaluation was performed.

Evaluation criteria

A: A bent part is not whitened and returns to the original sheet shape or film shape (presence of a restoring force).
B: A bent part is whitened but returns to the original sheet shape or film shape (presence of restoring force).
C: There is whitening at a bent part, and the bent part does not return to the original sheet shape or film shape (absence of restoring force).

(6) Swelling ratio

(a) Swelling ratio of sheet

Sheets of resin compositions obtained in examples and comparative examples were each cut into 2 cm (W) × 5 cm (L), and these were used as measurement samples.
The mass (E [g]) of each measurement sample was measured, and the sample was immersed in 100 [mL] of ion exchange water measured in a 200 mL beaker at room temperature (22°C) for 24 hours to swell. Thereafter, the measurement sample was taken out, water on the sample surface was wiped using a paper towel, and the mass (F [g]) thereof was measured. When the swelling ratio is less than 300%, it can be judged that the change in dimension due to swelling is small. When a gel-like water-absorbing resin was desorbed from a swollen resin composition, this was evaluated as "gel desorption".

$$Swelling~ratio~[\%] = (F - E)/E \times 100$$

(b) Swelling ratio of film

Separately, films of resin compositions obtained in examples and comparative examples were each cut into 2 cm (W) $\times$ 5 cm (L), and these were used as measurement samples.

The mass (E [g]) of each measurement sample was measured, and the sample was immersed in 100 [mL] of ion exchange water measured in a 200 mL beaker at room temperature (22°C) for 1 minute to swell. The measurement sample was taken out, water on the sample surface was wiped using a paper towel, and the mass (F [g]) thereof was measured. When the swelling ratio is less than 200%, it can be judged that the change in dimension due to swelling is small. When a gel-like water-absorbing resin was desorbed from a swollen resin composition, this was evaluated as "gel desorption".

$$Swelling~ratio~[\%] = (F - E)/E \times 100$$

(7) Slimy feeling

Sheets or films of the resin compositions obtained in examples and comparative examples were each cut into 2 cm (W) $\times$ 5 cm (L), and these were used as measurement samples.

Each measurement sample obtained in an example or the like was immersed in 100 mL of ion exchange water measured in a 200 mL beaker for 1 minute, water on a sample surface was wiped with a paper towel, and a surface of the measurement sample was rubbed with a hand, followed by evaluation according to the following evaluation criteria.

Evaluation criteria

    A: No slimy feeling was felt.
    B: No cobwebbing occurred but slimy feeling was felt.
    C: Slimy feeling was felt and cobwebbing occurred.

(8) Friction physical property

Sheets or films of the resin compositions obtained in examples and comparative examples were each cut into 2 cm (W) $\times$ 5 cm (L), and these were used as measurement samples.

After 30 seconds from dropping 0. 2 mL of ion exchange water onto a coating surface of each of the measurement sample, the coefficient of friction was monitored using a friction tester (Model: KES-SE, manufactured by KATO TECH CO., LTD.) under the following test conditions.

Sensor: silicone
Load: 50 [g]
Speed: 5 [mm/sec]

(i) Mean coefficient of friction (MIU)

The mean coefficient of friction has correlation with ease of slipping or resistance to slipping when rubbing the surface. The larger the value is, the more difficult the surface is to slip.

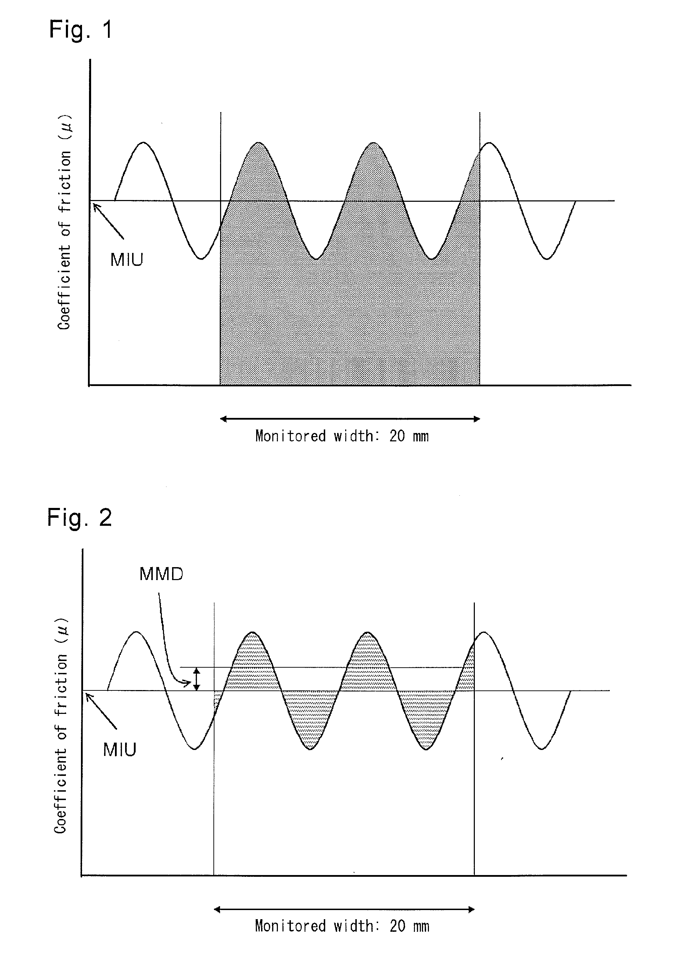

A schematic view of obtaining a mean coefficient of friction (MIU) from the monitored result of the coefficient of friction $\mu$ is shown in Fig. 2.

As shown in Fig. 2, a surface of a measurement sample is scanned to monitor the coefficient of friction $\mu$ of a surface. Then, the coefficient of friction $\mu$ is integrated at a monitored width of 20 mm (shadow area of Fig. 2). By dividing the integrated value by the monitored width (20 mm), the mean coefficient of friction (MIU) is obtained.

When the value of MIU is 0.3 or less, it can be said that the slipping property is good.

(ii) Deviation in mean coefficient of friction (MMD)

The deviation in mean coefficient of friction has correlation with smoothness and roughness when rubbing the surface. The larger this value is, the rougher the surface is.
A schematic view of obtaining a deviation in mean coefficient of friction (MMD) from the monitored result of the coefficient of friction is shown in Fig .3
As shown in Fig. 3, an absolute value of a difference between the mean coefficient of friction (MIU) and the coefficient of friction $\mu$ is integrated at a monitored width of 20 mm (shadow area of Fig. 3). A deviation in mean coefficient of friction (MMD) is obtained by dividing the integrated value by the monitored width (20 mm).
When the value of MMD is 0. 015 or less, it can be said that the smoothness of the surface is good.

(iii) Repetition test

After first monitoring, water on a surface was wiped with a paper towel, and a sheet or a film was placed in an oven set at 50°C to dry. Then, second monitoring was performed under the same conditions as described above. Similarly, the monitoring was repeated up to 6 times, and the coefficient of friction $\mu$ was monitored.

(9) Drug release amount

A sheet or a film of the resulting resin composition was cut into a rectangular shape of 2 cm (W) $\times$ 5 cm (L) $\times$ 0.1 cm (T) (mass: 1.0 g), and immersed in 10 g of water for a predetermined time (10, 20, 30, and 60 minutes).
The water (4.5 mL) after the sheet or the film was taken out was placed in quartz glass having a thickness of 1 cm and the absorbance at a wavelengths of 289 nm was measured using an ultraviolet-visible spectrophotometer (Model: UV-3150, manufactured by Shimadzu Corporation). Using the resulting absorbance, the amount of extracted ascorbic acid was calculated from a calibration curve of ascorbic acid which had been measured in advance under the same conditions.

Production Example 1: Method for producing water-absorbing modified polyalkylene oxide

A storage tank A equipped with a stirrer and held at 80°C was charged with 100 parts by mass of a fully dehydrated polyethylene oxide having a number average molecular weight of 20,000, 0.90 parts by mass of 1,4-butanediol and 0.1 parts by mass of dioctyltin dilaurate, followed by stirring under a nitrogen gas atmosphere to obtain a uniform mixture. Separately, a storage tank B held at 30°C was charged with dicyclohexylmethane-4,4'-diisocyanate and the tank was stored under a nitrogen gas atmosphere.
Using a metering pump, the mixture of the storage tank A was continuously supplied at a rate of 500 [g/min] and dicyclohexylmetahane-4,4'-disisocyanate of the storage tank B was continuously supplied at a rate of 19.4 [g/min] to a twin-screw extruder set at 110 to 140°C (R value = 1.00), the materials were mixed in the extruder to perform a reaction, a strand was discharged through an opening of the extruder, and pelletized with a pelletizer to obtain a water-absorbing modified polyalkylene oxide.
The resulting water-absorbing modified polyalkylene oxide had a water absorption ability of 25 [g/g], a proportion of water-soluble component of 15.5 [mass %], and a melt viscosity of 320 [Pa·s].

Production Example 2: Method for producing water-absorbing modified polyalkylene oxide

An ethylene oxide/propylene oxide (mass ratio: 90/10) copolymer having a number average molecular weight of 15,000 was supplied at a rate of 250 [g/min] and ethylene glycol heated to 40°C was supplied at a rate of 2.1 [g/min] to a 40 mm-diameter single-screw extruder (L/D = 40, preset temperature: 90°C), respectively, which were then melt-mixed.
The mixture obtained from a discharging opening (the mixture was discharged in a uniform, molten state, and it was confirmed by LC analysis that the materials were mixed in a charged ratio) was continuously supplied to a hopper port (preset temperature: 80°C) of a 30 mm-diameter twin-screw extruder (L/D = 41.5). At the same time, dioctyltin dilaurate was supplied to the hopper port of the twin-screw extruder at a rate of 0.5 [g/min].
Separately, dicyclohexylmethane-4,4'-diisocyanate adjusted to 30°C was supplied to a screw barrel section situated on a downstream side of the hopper port of the twin-screw extruder at a rate of 12.4 [g/min] (R value = 0. 95) and a reaction was carried out continuously under a nitrogen atmosphere (preset temperature: 180°C). A strand obtained from an opening of the twin-screw extruder was cooled, and then pelletized with a pelletizer to obtain a water-absorbing modified polyalkylene oxide.
The resulting water-absorbing modified polyalkylene oxide had a water absorption ability of 20 [g/g], a proportion of water-soluble component of 11.3 [mass %], and a melt viscosity of 150 [Pa·s].

Production Example 3: Method for producing water-soluble modified polyalkylene oxide

A polyethylene oxide having a number average molecular weight of 20,000 was supplied to a 40 mm-diameter single-screw extruder (L/D = 40, preset temperature: 90°C) at a rate of 250 [g/min] and molten. The melt obtained from a discharge port was continuously supplied to a hopper port (preset temperature: 80°C) of a 30 mm-diameter twin-screw extruder (L/D=41.5). At the same time, dioctyltin dilaurate was supplied to the hopper port of the twin-screw extruder at a rate of 0.25 [g/min].
Separately, dicyclohexylmethane-4,4'-diisocyanate adjusted to 30°C was supplied to a screw barrel section situated on a downstream side of the hopper port of the twin-screw extruder at a rate of 3.27 [g/min] (R value =1.00) and a reaction was carried out continuously under a nitrogen atmosphere (preset temperature: 180°C). A strand obtained from an opening of the twin-screw extruder was cooled, and then pelletized with a pelletizer to obtain a water-soluble modified polyalkylene oxide.
The resulting water-absorbing modified polyalkylene oxide had a proportion of water-soluble component of 100 [mass %] and a melt viscosity of 220 [Pa·s]. Since the resulting modified polyalkylene oxide was water-soluble, the water absorption ability could not be measured.

Production Example 4: Method for producing cross-linked polyacrylate

To a 1 L four-necked cylindrical round-bottom flask equipped with a stirrer, a reflux condenser and a nitrogen gas inlet tube was added 550 mL of n-heptane. In this was added and dispersed 1.38 g of hexaglyceryl monobeherate (surfactant: NONION GV-106 manufactured by NOF Corporation) having an HLB of 13.1, and the temperature was raised to 50°C to dissolve the surfactant, followed by cooling to 30°C.
Meanwhile, a 500 mL Erlenmeyer flask was separately prepared, and 92 g of a 80 mass % aqueous acrylic acid solution was added thereto. To this was added dropwise 152.6 g of a 20.1 mass % aqueous sodium hydroxide solution while cooling from the outside to perform neutralization of 75 mol %, thereafter, 0. 11 g of potassium persulfate and 0.019 g of ethylene glycol diglycidyl ether as a crosslinking agent were further added and dissolved. Thereby, an aqueous solution of partially neutralized acrylic acid was obtained.
Then, the whole of the aqueous solution of partially neutralized acrylic acid was added and dispersed in the four-necked cylindrical round bottom flask, the system was replaced with nitrogen, the temperature was raised, and a polymerization reaction was performed over 3 hours while the temperature of the bath was retained at 70°C.
After completion of the polymerization reaction, a slurry containing the resulting cross-linked polyacrylate was dried at 120°C for 2 hours to obtain 191.2 g of a cross-linked polyacrylate.
The resulting cross-linked polyacrylate had a water absorption ability of 550 [g/g] and a proportion of water-soluble component of 0.06 [%]. The melt viscosity of the resulting cross-linked polyacrylate could not be measured.

Example 1

6 [kg/hr] of a water-absorbing modified polyalkylene oxide obtained as in Production Example 1 and 15 [kg/hr] of an ethylene/vinyl acetate copolymer [abbreviation: EVA, manufactured by Sumitomo Chemical Co., Ltd.: Evatate D3010, vinyl acetate content = 10%, melt index (MI) = 6, HDD = 35] were supplied to a 28 mm-diameter twin-screw extruder (L/D = 40) set at 130°C to obtain a resin composition. The compositional ratio of the resin composition is shown in Table 1.
The resulting resin composition was molded into a 6 cm (W) × 9 cm (L) × 0.15 cm (T) sheet of the resin composition using an injection-molding machine (Model: TI80G2, manufactured by Toyo Machinery and Metal Co., Ltd.) set at 130 to 150°C.
The resulting sheet of the resin composition was cut into a predetermined size and the above-described various measurements and evaluations were performed. The results are shown in Table 2.

Example 2

7 [kg/hr] of a water-absorbing modified polyalkylene oxide obtained as in Production Example 1 and 14 [kg/hr] of an ethylene/acrylic acid copolymer [abbreviation: EAA, manufactured by Dow Chemical: Primacor 5980, acrylic acid content = 20%, MI = 300, HDD = 40] were supplied to a 28 mm-diameter twin-screw extruder (L/D = 40) set at 140°C to obtain a resin composition. The compositional ratio of the resin composition is shown in Table 1.
The resulting resin composition was molded into a 10 cm (W) × 10 cm (L) × 0.10 cm (T) sheet of the resin composition using a hot press (manufactured by Gonno Hydraulic Press, 40 t press, pressure: 50 [kg/cm$^2$]) set at 130°C.
The resulting sheet of the resin composition was cut into a predetermined size, and the above-described various measurements and evaluations were performed. The results are shown in Table 2.

Example 3

10 [kg/hr] of a water-absorbing modified polyalkylene oxide obtained as in Product Example 2 and 10 [kg/hr] of an ethylene/acrylic acid copolymer [abbreviation: EAA, manufactured by Dow Chemical: Primacor 3460, acrylic acid content = 9.7%, MI = 20, HDD = 42] were supplied to a 28 mm-diameter twin-screw extruder (L/D = 40) set at 130°C to obtain a resin composition. The compositional ratio of the resin composition is shown in Table 1.
The resulting resin composition was molded into a 10 cm (W) × 10 cm (L) × 0.10 cm (T) sheet of the resin composition using a hot press (manufactured by Gonno Hydraulic Press, 40 t press, pressure: 50 [kg/cm$^2$]) set at 130°C.
The resulting sheet of the resin composition was cut into a predetermined size, and the above-described various measurements and evaluations were performed. The results are shown in Table 2.

Example 4

6 [kg/hr] of a water-absorbing modified polyalkylene oxide obtained as in Product Example 1, 12 [kg/hr] of an ethylene/vinyl acetate copolymer [abbreviation: EVA, manufactured by Sumitomo Chemical Co., Ltd.: Evatate D2010, vinyl acetate content = 25%, MI = 3, HDD = 28], and 3 [kg/hr] of an ethylene/acrylic acid copolymer [abbreviation: EAA, manufactured by Dow Chemical: Primacor 3460, acrylic acid content = 9.7%, MI = 20, HDD = 42] were supplied to a 28 mm-diameter twin-screw extruder (L/D = 40) set at 140°C, respectively, to obtain a resin composition. The compositional ratio of the resin composition is shown in Table 1.
The resulting resin composition was molded into a 10 cm (W) × 10 cm (L) × 0.10 cm (T) sheet of the resin composition using a hot press (Gonno Hydraulic Press, 40 t press, pressure: 50 [kg/cm$^2$]) set at 130°C.
The resulting sheet of the resin composition was cut into a predetermined size, and the above-described various measurements and evaluations were performed. The results are shown in Table 2.

Example 5

5 [kg/hr] of a water-absorbing modified polyalkylene oxide obtained as in Production Example 2 and 8 [kg/hr] of an ethylene/ethyl acrylate copolymer [abbreviation: EEA, manufactured by Nippon Unicar Company Limited: NUC-6170, ethyl acrylate content = 18%, MI = 6, HDD = 31] were supplied to a 28 mm-diameter twin-screw extruder (L/D = 40) set at 150°C to obtain a resin composition. The compositional ratio of the resin composition is shown in Table 1.
The resulting resin composition was molded into a 10 cm (W) × 10 cm (L) × 0.10 cm (T) sheet of the resin composition using a hot press (Gonno Hydraulic Manufacturing Co., Ltd, 40 t press, pressure: 50 [kg/cm$^2$]) set at 150°C.
The resulting sheet of the resin composition was cut into a predetermined size, and the above-described various measurements and evaluations were performed. The results are shown in Table 2.

Example 6

6 [kg/hr] of a water-absorbing modified polyalkylene oxide obtained as in Production Example 1, 15 [kg/hr] of an ethylene/vinyl acetate copolymer [abbreviation: EVA, manufactured by Sumitomo Chemical Co., Ltd.: Evatate D3010, vinyl acetate content = 10%, melt index (MI) = 6, HDD 35], and 42 [g/hr] of ascorbic acid were supplied to a 28 mm-diameter twin-screw extruder (L/D = 40) set at 130°C to obtain a resin composition.
The resulting resin composition was processed into an inflation film having a width of 160 mm and a thickness of 80 μm using an extruder (SYH25-25 manufactured by Silicone Machinery, L/D = 25) set at 130 to 150°C and an inflation molding machine (SF-300 manufactured by Silicone Machinery).
The resulting inflation film was cut into a predetermined size, and the above-described various measurements and evaluations were performed. The results are shown in Table 2.
6 [kg/hr] of a water-absorbing modified polyalkylene oxide obtained as in Production Example 1, 15 [kg/hr] of an ethylene/vinyl acetate copolymer [abbreviation: EVA, manufactured by Sumitomo Chemical Co., Ltd.: Evatate D3010, vinyl acetate content = 10%, melt index (MI) = 6, HDD = 35] and 42 [g/hr] (corresponding to 0. 2 parts by mass based on 100 parts by mass of a resin composition) of ascorbic acid were supplied to a 28 mm-diameter twin-screw extruder (L/D = 40) set at 130°C to obtain a resin composition. The compositional ratio of the resin composition is shown in Table 1.
The resulting resin composition was molded into a 6 cm (W) × 9 cm (L) × 0.15 cm (T) sheet of the resin composition using an injection molding machine (Model: TI80G2, manufactured by Toyo Machinery and Metal Co., Ltd.) set at 130 to 150°C.
The resulting sheet of the resin composition was cut into a predetermined size, and the above-described various measurements and evaluations were performed. The results are shown in Tables 2 and 3.

Comparative Example 1

15 [kg/hr] of a water-absorbing modified polyalkylene oxide obtained as in Production Example 1 and 3 [kg/hr] of an ethylene/vinyl acetate copolymer [abbreviation: EVA, manufactured by Sumitomo Chemical Co., Ltd.: Evatate D3010, vinyl acetate content = 10%, MI = 6, HDD = 35] were supplied to a 28 mm-diameter twin-screw extruder (L/D = 40) set at 120°C to obtain a resin composition. The compositional ratio of the resin composition is shown in Table 1. The resulting resin composition was molded into a 6 cm (W) $\times$ 9 cm (L) $\times$ 0.15 cm (T) sheet of the resin composition using an injection molding machine (Model: TI80G2, manufactured by Toyo Machinery and Metal Co., Ltd.) set at 130 to 150°C.

The resulting sheet of the resin composition was cut into a predetermined size, and the above-described various measurements and evaluations were performed. The results are shown in Table 2.

Comparative Example 2

6 [kg/hr] of a water-absorbing modified polyalkylene oxide obtained as in Production Example 1 and 15 [kg/hr] of an ethylene/vinyl acetate copolymer [abbreviation: EVA, manufactured by DuPont-Mitsui Polychemical Co., Ltd.: Evaflex EV45LX, vinyl acetate content = 46%, MI = 2.5, HDD = 8] were supplied to a 28 mm-diameter twin-screw extruder (L/D = 40) set at 140°C to obtain a resin composition. The compositional ratio of the resin composition is shown in Table 1. The resulting resin composition was molded into a 6 cm (W) $\times$ 9 cm (L) $\times$ 0.15 cm (T) sheet of the resin composition using an injection molding machine (Model: TI80G2, manufactured by Toyo Machinery and Metal Co., Ltd.) set at 130 to 150°C.

The resulting sheet of the resin composition was cut into a predetermined size, and the above-described various measurements and evaluations were performed. The results are shown in Table 2.

Comparative Example 3

6 [kg/hr] of a water-soluble polyethylene oxide (Model: PEO8Z manufactured by Sumitomo Seika Chemicals Co., Ltd., viscosity average molecular weight: 2,000,000) and 15 [kg/hr] of an ethylene/vinyl acetate copolymer [abbreviation: EVA, manufactured by Sumitomo Chemical Co., Ltd.: Evatate D3010, vinyl acetate content = 10%, MI = 6, HDD = 35] were supplied to a 28 mm-diameter twin-screw extruder (L/D = 40) set at 220°C to obtain a resin composition. The compositional ratio of the resin composition is shown in Table 1.

The resulting resin composition was molded into a 10 cm (W) $\times$ 10 cm (L) $\times$ 0.10 cm (T) sheet of the resin composition using a hot press (manufactured by Gonno Hydraulic Press, 40 t press, pressure: 50 [kg/cm$^2$]) set at 130°C.

The resulting sheet of the resin composition was cut into a predetermined size, and the above-described various measurements and evaluations were performed. The results are shown in Table 2.

Comparative Example 4

6 [kg/hr] of a water-soluble modified polyalkylene oxide obtained as in Production Example 3 and 12 [kg/hr] of an ethylene/vinyl acetate copolymer [abbreviation: EVA, manufactured by Sumitomo Chemical Co., Ltd.: Evatate D3010, vinyl acetate content = 10%, MI = 6, HDD = 35] were supplied to a 28 mm-diameter twin-screw extruder (L/D = 40) set at 130°C to obtain a resin composition. The compositional ratio of the resin composition is shown in Table 1. The resulting resin composition was molded into a 6 cm (W) $\times$ 9 cm (L) $\times$ 0.15 cm (T) sheet of the resin composition using an injection molding machine (Model: TI80G2, manufactured by Toyo Machinery and Metal Co., Ltd.) set at 130 to 150°C.

The resulting sheet of the resin composition was cut into a predetermined size, and the above-described various measurements and evaluations were performed. The results are shown in Table 2.

Comparative Example 5

2 [kg/hr] of a water-absorbing modified polyalkylene oxide obtained as in Production Example 2 and 18 [kg/hr] of an ethylene/acrylic acid copolymer [abbreviation: EAA, manufactured by Dow Chemical: Primacor 3460, acrylic acid content = 9.7%, MI = 20, HDD = 42] were supplied to a 28 mm-diameter twin-screw extruder (L/D= 40) set at 130°C to obtain a resin composition. The compositional ratio of the resin composition is shown in Table 1.

The resulting resin composition was molded into a 10 cm (W) $\times$ 10 cm (L) $\times$ 0.10 cm (T) sheet of the resin composition using a hot press (manufactured by Gonno Hydraulic Press, 40 t press, pressure: 50 [kg/cm$^2$]) set at 130°C.

The resulting sheet of the resin composition was cut into a predetermined size, and the above-described various measurements and evaluations were performed. The results are shown in Table 2.

Comparative Example 6

6 [kg/hr] of a water-absorbing modified polyalkylene oxide obtained as in Production Example 1 and 15 [kg/hr] of a high impact polystyrene [abbreviation: HIPS, manufactured by BASF: 476L, HDD =72] were supplied to a 28 mm-diameter twin-screw extruder (L/D = 40) set at 220°C to obtain a resin composition. The compositional ratio of the resin composition is shown in Table 1.
The resulting resin composition was molded into a 10 cm (W) $\times$ 10 cm (L) $\times$ 0.10 cm (T) sheet of the resin composition using a hot press (manufactured by Gonno Hydraulic Press, 40 t press, pressure: 50 [kg/cm$^2$]) set at 220°C.
The resulting sheet of the resin composition was cut into a predetermined size, and the above-described various measurements and evaluations were performed. The results are shown in Table 2.

Comparative Example 7

6 [kg/hr] of a cross-linked polyacrylate obtained in Production Example 4 and 15 [kg/hr] of an ethylene/vinyl acetate copolymer [abbreviation: EVA: manufactured by Sumitomo Chemical Co., Ltd. : Evatate D3010, vinyl acetate content = 10%, MI = 6, HDD = 35] were supplied to a 28 mm-diameter twin-screw extruder (L/D = 40 ) set at 120°C to obtain a resin composition. The compositional ratio of the resin composition is shown in Table 1.
The resulting resin composition was molded into a 10 cm (W) $\times$ 10 cm (L) $\times$ 0.10 cm (T) sheet of the resin composition using a hot press (manufactured by Gonno Hydraulic Press, 40 t press, pressure: 50 [kg/cm$^2$]) set at 130°C.
The resulting sheet of the resin composition was cut into a predetermined size, and the above-described various measurements and evaluations were performed. The results are shown in Table 2.

Comparative Example 8

15 [kg/hr] of a water-absorbing modified polyalkylene oxide obtain as in Production Example 1 and 3 [kg/hr] of an ethylene/vinyl acetate copolymer [abbreviation: EVA, manufactured by Sumitomo Chemical Co., Ltd.: Evatate D3010, vinyl acetate content = 10%, MI = 6, HDD = 35] were supplied to a 28 mm-diameter twin-screw extruder (L/D = 40) set at 120°C to obtain a resin composition. The compositional ratio of the resin composition is shown in Table 1.
The resulting resin composition was processed into an inflation film having a width of 160 mm and a thickness of 80 $\mu$m using an extruder (SYH25-25, L/D = 25, manufactured by Silicone Machinery) set at 130 to 150°C and an inflation molding machine (SF-300 manufactured by Silicone Machinery).
The resulting inflation film was cut into a predetermined size, and the above-described various measurements and evaluations were performed. The results are shown in Table 2.

Comparative Example 9

6 [kg/hr] of a water-absorbing modified polyalkylene oxide obtained as in Production Example 1, 15 [kg/hr] of a high impact polystyrene [abbreviation: HIPS, manufactured by BASF: 476L, HDD = 72] and 42 [g/hr] (corresponding to 0.2 parts by mass based on 100 parts by mass of a resin composition) of ascorbic acid were supplied to a 28 mm-diameter twin-screw extruder (L/D = 40) set at 220°C to obtain a resin composition. The compositional ratio of the resin composition is shown in Table 1.
The resulting resin composition was molded into a 10 cm (W) $\times$ 10 cm (L) $\times$ 0.1 cm (T) sheet of the resin composition using a hot press (manufactured by Gonno Hydraulic Press, 40 t press, pressure: 50 [kg/cm$^2$]) set at 220°C.
The resulting sheet of the resin composition was cut into a predetermined size, and the above-described various measurements and evaluations were performed. The results are shown in Tables 2 and 3.
[Table 1]

| | Modified polyalkylene oxide | | Different resin | | Thermoplastic resin | | | | Thickness |
|---|---|---|---|---|---|---|---|---|---|
| | Kind | Supply amount [kg/hr] | Kind | Supply amount [kg/hr] | Kind | HDD | Supply amount | | |
| | | | | | | | [kg/hr] | [Parts by mass] *) | |
| Example 1 | Production Example 1 | 6 | - | - | EVA | 35 | 15 | 250 | 0.15 cm |
| Example 2 | Production Example 1 | 7 | - | - | EAA | 40 | 14 | 200 | 0.10 cm |
| Example 3 | Production Example 2 | 10 | - | - | EAA | 42 | 10 | 100 | 0.10 cm |
| Example 4 | Production Example 1 | 6 | - | - | EVA | 28 | 12 | 250 | 0.10 cm |
| | | | | | EAA | 42 | 3 | | |
| Example 5 | Production Example 2 | 5 | - | - | EEA | 31 | 8 | 160 | 0.10 cm |
| Example 6 | Production Example 1 | 6 | - | - | EVA | 35 | 15 | 250 | 80 μm |
| Example 7 | Production Example 1 | 6 | - | - | EVA | 35 | 15 | 250 | 0.10 cm |
| Comparative Example 1 | Production Example 1 | 15 | - | - | EVA | 35 | 3 | 20 | 0.15 cm |
| Comparative Example 2 | Production Example 1 | 6 | | | EVA | 8 | 15 | 250 | 0.15 cm |
| Comparative Example 3 | - | - | PEO8Z | 6 | EVA | 35 | 15 | 250 | 0.10 cm |
| Comparative Example 4 | Production Example 3 | 6 | - | - | EVA | 35 | 12 | 200 | 0.15 cm |
| Comparative Example 5 | Production Example 2 | 2 | - | - | EAA | 42 | 18 | 900 | 0.10 cm |
| Comparative Example 6 | Production Example 1 | 6 | - | - | HIPS | 72 | 15 | 250 | 0.10 cm |
| Comparative Example 7 | - | - | Production Example 4 | 6 | EVA | 35 | 15 | 250 | 0.10 cm |
| Comparative Example 8 | Production Example 1 | 15 | - | - | EVA | 35 | 3 | 20 | 80 μm |
| Comparative Example 9 | Production Example 1 | 6 | - | - | HIPS | 72 | 15 | 250 | 0.10 cm |

*) Parts by mass of a thermoplastic resin, letting a water-absorbing modified polyalkylene oxide or a different resin to be 100 parts by mass

[Table 2]

| | Bending test | | Swelling ratio [%] | Slimy feeling | Friction physical property | | | |
| --- | --- | --- | --- | --- | --- | --- | --- | --- |
| | | | | | Mean coefficient of friction (MIU) | | Deviation in mean coefficient of friction (MMD) | |
| | 90 degrees | 180 degrees | | | First time | 6th time | First time | 6th time |
| Example 1 | A | A | 180 | A | 0.18 | 0.22 | 0.009 | 0.014 |
| Example 2 | A | A | 220 | A | 0.16 | 0.18 | 0.011 | 0.015 |
| Example 3 | A | A | 250 | A | 0.11 | 0.16 | 0.009 | 0.013 |
| Example 4 | A | A | 190 | A | 0.09 | 0.21 | 0.009 | 0.012 |
| Example 5 | A | A | 280 | A | 0.14 | 0.17 | 0.010 | 0.014 |
| Example 6 | A | A | 150 | A | 0.18 | 0.22 | 0.009 | 0.014 |
| Example 7 | A | A | 180 | A | 0.18 | 0.22 | 0.009 | 0.014 |
| Comparative Example 1 | B | C | 560 | A | 0.15 | 0.35 | 0.014 | 0.017 |
| Comparative Example 2 | C | C | 250 | B | 0.21 | 0.31 | 0.013 | 0.016 |
| Comparative Example 3 | B | C | 190 | C | 0.75 | 0.81 | 0.069 | 0.089 |
| Comparative Example 4 | A | A | 250 | B | 0.38 | 0.82 | 0.076 | 0.097 |
| Comparative Example 5 | A | A | 50 | A | 0.41 | 0.74 | 0.087 | 0.088 |
| Comparative Example 6 | C | C | 190 | A | 0.28 | 0.59 | 0.009 | 0.001 |
| Comparative Example 7 | A | A | Gel desorption | A | 0.67 | 0.77 | 0.098 | 0.115 |
| Comparative Example 8 | B | C | 150 | A | 0.15 | 0.35 | 0.014 | 0.017 |
| Comparative Example 9 | C | C | 190 | A | 0.28 | 0.59 | 0.087 | 0.088 |

As is apparent from the results shown in Table 2, the resin composition of the present invention containing 100 parts by mass of a water-absorbing modified polyalkylene oxide and 60 to 500 parts by mass of a thermoplastic resin having a type D durometer hardness (HDD) of 10 to 60 has small change in dimension due to swelling, maintains its lubricity even if used repeatedly, has no slimy feeling, and has flexibility.
[Table 3]

| | Immersion time | Drug release amount | |
| --- | --- | --- | --- |
| | [min] | [mg] | [mass %]*) |
| Example 7 | 10 | 0.6 | 30 |
| | 20 | 0.7 | 35 |
| | 30 | 0.8 | 40 |
| | 60 | 1.1 | 55 |

(continued)

| | Immersion time | Drug release amount | |
| --- | --- | --- | --- |
| | [min] | [mg] | [mass %][*] |
| Comparative Example 9 | 10 | 0 | 0 |
| | 20 | 0 | 0 |
| | 30 | 0 | 0 |
| | 60 | 0 | 0 |
| [*] Amount (mass %) of release of 2 mg (amount contained in 1 g of sheet of resin composition) of ascorbic acid in water | | | |

As is apparent from the results shown in Table 3, it can be understood that the resin composition of the present invention containing 100 parts by mass of a water-absorbing modified polyalkylene oxide, 60 to 500 parts by mass of a thermoplastic resin having a type D durometer hardness (HDD) of 10 to 60, and ascorbic acid (drug) can efficiently release ascorbic acid into water without degradation by heat.
On the other hand, it can be understood that the resin composition of Comparative Example 8 cannot release the added ascorbic acid in water because of degradation by heat, since it necessitates a high temperature in the production stage.

Industrial Applicability

Since the resin composition of the present invention maintains its lubricity even if used repeatedly, has no slimy feeling, and has flexibility, it can be optimally used widely in the field requiring lubricity under wet conditions, for example, a wet shaving instrument represented by a razor, and medical instruments such as a catheter.

## Claims

1. A resin composition comprising 100 parts by mass of a water-absorbing modified polyalkylene oxide and 60 to 500 parts by mass of a thermoplastic resin having a type D durometer hardness (HDD) of 10 to 60.

2. The resin composition according to claim 1, wherein the water-absorbing modified polyalkylene oxide is a modified polyalkylene oxide obtained by reacting a polyalkylene oxide compound, a diol compound and a diisocyanate compound.

3. The resin composition according to claim 1 or 2, wherein the water-absorbing modified polyalkylene oxide has a water absorption ability of 10 to 40 [g/g].

4. The resin composition according to any one of claims 1 to 3, wherein the water-absorbing modified polyalkylene oxide has a proportion of water-soluble component of 5 to 30% by mass.

5. The resin composition according to any one of claims 1 to 4, wherein the thermoplastic resin is an ethylene/vinyl acetate copolymer, an ethylene/acrylic acid copolymer, an ethylene/ethyl acrylate copolymer or a combination thereof.

## Fig. 1

Monitored width: 20 mm

## Fig. 2

Monitored width: 20 mm

## INTERNATIONAL SEARCH REPORT

| | International application No. |
|---|---|
| | PCT/JP2011/059418 |

A. CLASSIFICATION OF SUBJECT MATTER
*C08L71/02*(2006.01)i, *C08L23/08*(2006.01)i, *C08L31/04*(2006.01)i, *C08L101/12*(2006.01)i

According to International Patent Classification (IPC) or to both national classification and IPC

B. FIELDS SEARCHED

Minimum documentation searched (classification system followed by classification symbols)
C08L71/00-71/14, C08L23/00-23/36, C08L31/00-31/08, C08L101/00-101/14

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
|---|---|---|
| X | JP 2003-96155 A  (Sumitomo Seika Chemicals Co., Ltd.),<br>03 April 2003 (03.04.2003),<br>claims; paragraphs [0012], [0014], [0021], [0026]; examples<br>(Family: none) | 1-5 |
| X | JP 2000-17168 A  (Sumitomo Seika Chemicals Co., Ltd.),<br>18 January 2000 (18.01.2000),<br>claims; paragraphs [0006], [0009]; examples<br>(Family: none) | 1-5 |

[X] Further documents are listed in the continuation of Box C.  [ ] See patent family annex.

| | |
|---|---|
| *      Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 07 July, 2011 (07.07.11) | 19 July, 2011 (19.07.11) |

| Name and mailing address of the ISA/ | Authorized officer |
|---|---|
| Japanese Patent Office | |
| Facsimile No. | Telephone No. |

**INTERNATIONAL SEARCH REPORT**

| International application No. |
| --- |
| PCT/JP2011/059418 |

C (Continuation).  DOCUMENTS CONSIDERED TO BE RELEVANT

| Category* | Citation of document, with indication, where appropriate, of the relevant passages | Relevant to claim No. |
| --- | --- | --- |
| X | JP 2003-334419 A  (Sumitomo Seika Chemicals Co., Ltd., Meiwa Gravure Co., Ltd.), 25 November 2003 (25.11.2003), claims; paragraphs [0007], [0009], [0011], [0015], [0018]; examples (Family: none) | 1-5 |
| X | JP 2004-276241 A  (Sumitomo Seika Chemicals Co., Ltd.), 07 October 2004 (07.10.2004), claims; paragraphs [0008], [0022], [0024], [0030], [0031], [0037], [0038]; examples (Family: none) | 1-5 |
| X | JP 11-70730 A  (Sumitomo Seika Chemicals Co., Ltd.), 16 March 1999 (16.03.1999), claims; paragraphs [0011], [0015], [0023]; examples (Family: none) | 1-5 |
| X A | JP 6-316623 A  (Sumitomo Seika Chemicals Co., Ltd.), 15 November 1994 (15.11.1994), claims; paragraphs [0015], [0024], [0027]; examples & WO 1994/020561 A1 | 1-3,5 4 |
| X A | JP 8-12871 A  (Sumitomo Seika Chemicals Co., Ltd.), 16 January 1996 (16.01.1996), claims; paragraphs [0020], [0034], [0035]; examples (Family: none) | 1,2,5 3,4 |
| X A | JP 7-173385 A  (Sumitomo Seika Chemicals Co., Ltd.), 11 July 1995 (11.07.1995), claims; paragraphs [0014], [0018], [0027], [0028]; examples (Family: none) | 1,2,5 3,4 |

| International application No. |
|---|
| PCT/JP2011/059418 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 8-3329 A   (Elf Atochem S.A.),<br>09 January 1996 (09.01.1996),<br>claims; paragraphs [0013], [0022], [0025]<br>& US 5800928 A          & US 5869414 A<br>& EP 688826 A1          & DE 19522333 A<br>& DE 69514723 D         & DE 69514723 T<br>& FR 2721320 A          & NO 952375 A<br>& AU 2172195 A          & FI 953025 A<br>& SG 33383 A            & IL 114131 A<br>& AT 189246 T           & CA 2152034 A<br>& ES 2142464 T          & DK 688826 T<br>& KR 10-0153041 B       & CN 1118737 A<br>& AU 673646 B           & NO 952375 A0 | 1-5 |
| A | JP 8-2095 A   (Gunze Ltd.),<br>09 January 1996 (09.01.1996),<br>claims; paragraphs [0007], [0010], [0013]<br>(Family: none) | 1-5 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 54094961 A
- JP 9502632 A
- JP 2004509207 A

**Non-patent literature cited in the description**

- *Japanese Industrial Standard: JIS K,* 1986, 7215